# EUROPEAN PATENT SPECIFICATION

(11) **EP 3 742 059 B1**
(45) Date of publication and mention of the grant of the patent: **18.12.2024**
(21) Application number: 19176043.8
(22) Date of filing: 22.05.2019
(51) Int. Cl.: F24D 19/10, F16K 37/00

(54) **AN ACTUATION ASSEMBLY IN A THERMOSTATIC RADIATOR VALVE**
BETÄTIGUNGSANORDNUNG IN EINEM THERMOSTATISCHEN HEIZKÖRPERVENTIL
ENSEMBLE D'ACTIONNEMENT DANS UNE VANNE DE RADIATEUR THERMOSTATIQUE

(43) Date of publication of application: 25.11.2020
(73) Proprietor: Pittway Sarl, 1180 Rolle (CH)
(72) Inventor: Hurst, Andrew, Carnwath, ML11 8LU (GB); Alber, Kurt, 70771 Leinfelden-Echterdingen (DE)
(74) Representative: Murgitroyd & Company

(56) References cited:
- EP-A1- 0 763 682
- EP-A2- 1 001 327
- GB-A- 2 560 964

## Description

### Field of the Invention

The present invention concerns thermostatic valves. More particularly, this invention concerns thermostatic radiator valves.

### Background of the Invention

Thermostatic radiator valves (TRVs) are devices which are connected to radiators to control the flow of fluid to the radiator. TRVs have traditionally contained a wax plug, connected to a pin which is in turn connected to a valve. The wax plug expands or contracts based on the surrounding (room) temperature, which moves a pin and the connected valve. As the room temperature increases, the wax plug expands, which closes the valve and restricts the flow of hot fluid into the radiator. In this way, the temperature of a room can be controlled.

Electrical TRVs have become increasingly popular in recent years. Electrical TRVs can use electrical temperature sensors to give an accurate temperature reading with reduced latency in comparison to the wax plug of traditional TRVs. Electrical TRVs can also have programmers so that individual or groups of radiators may be programmed for different temperatures at different times of the day and may be connected to a "smart" network which allows interconnectivity between appliances, and control from one or more central controllers. Electrical TRVs typically use a battery-powered electric motor to drive a linear actuator (in place of the wax plug of traditional TRVs) to move a pin which is connected to a valve. This arrangement often requires a gearbox between the motor and the linear actuator.

An example of a thermostatic radiator valve is described in EP1001327 A2 (DANFOSS AS).

GB 2560964 relates to a return temperature limiter remote sensor and actuator.

Some drawbacks have been identified with the above-mentioned arrangements. For example, the linear actuator and/or gearboxes used these electrical TRVs can be noisy, inefficient and/or bulky.

The present invention seeks to mitigate the above-mentioned problems. Alternatively or additionally, the present invention seeks to provide an improved thermostatic radiator valve.

### Summary of the Invention

The present invention is defined by the independent claims, and optional dependent claims.

The present invention provides, according to a first embodiment, a thermostatic radiator valve comprising a valve head and a valve body. The valve head comprises an actuation assembly for moving a valve pin of the valve body. The actuation assembly comprises: a pressure chamber; a pneumatic pump, which is according to the invention a peristaltic pump, and which is arranged to adjust the pressure inside the pressure chamber; and an output element for abutting the valve pin. The output element is arranged to move in response to a change of pressure inside the pressure chamber such that the change of pressure effects movement of the valve pin. The use of such an actuation assembly may avoid the need for a mechanical actuator and/or associated gearbox to move the valve pin, which may thereby simplify and reduce the noise and bulk of the TRV.

In the present invention, the output element is flexible. The output element is a diaphragm. The output element being a diaphragm may reduce the number of moving parts and sliding contacts, which is advantageous in terms of simplicity. The output element being a diaphragm may enable actuation whilst also enabling effective sealing of the pressure chamber. There may be reinforced portions of the diaphragm to control the movement of the diaphragm. The reinforced portions of the diaphragm may be arranged to control the shape of the diaphragm when the diaphragm is displaced due to pressure change within the pressure chamber. The reinforced portions of the diaphragm may be plastic, rubber or any material which can provide a reinforcing effect.

In some embodiments not part of the present invention, the output element may be a piston.

In the present invention, the output element may have an interior face, facing inwardly into the pressure chamber. The output element may have an exterior face, facing outwardly from the pressure chamber. The exterior face of the output element may be in contact with the valve pin. It may be that movement of the output element effects movement of the valve pin.

The TRV may comprise a housing which houses the actuation assembly. The pneumatic pump may be located within the housing of the TRV. In some embodiments, the pneumatic pump may be located within the housing of the TRV and outside the pressure chamber. In some embodiments, the pneumatic pump may be located inside the pressure chamber. Such an arrangement may be beneficial because it may reduce the extent of sealing between the pump and the pressure chamber.

The pneumatic pump is a peristaltic pump. A peristaltic pump has been identified as being especially advantageous in the context of a pneumatically actuated TRV. For example, peristaltic pumps may relatively compact, and therefore suitable in a TRV. The peristaltic pump may be arranged to adjust the pressure within the pressure chamber. The peristaltic pump may be operated to increase the pressure within the pressure chamber. The peristaltic pump may be operated to decrease the pressure within the pressure chamber. The peristaltic pump may be operated to maintain the pressure within the pressure chamber. Using a peristaltic pump in a TRV may be advantageous for the reduction of noise, size, energy requirements and/or frictional losses.

The peristaltic pump may be arranged to use the housing, and more preferably the pressure chamber wall, as a part of the pump. For example, the housing, and more preferably the pressure chamber, may be arranged as a reaction surface against which a tube may be deformed. The peristaltic pump may extend across the full width of the pressure chamber.

The peristaltic pump may comprise a tube and a wheel with at least one lobe. The wheel may be driven by a motor. The peristaltic pump may comprise a tube and a wheel with at least two lobes. Preferably, the wheel of the peristaltic pump comprises a multiplicity of lobes. The tube of the peristaltic pump may be arranged to transfer air between inside the pressure chamber and outside the pressure chamber. The tube of the peristaltic pump may be arranged to transfer air through the wall of the pressure chamber. The tube of the peristaltic pump may comprise two openings. The tube of the peristaltic pump may comprise a first opening which transfers air between the tube and outside of the pressure chamber, and a second opening which transfers air between the tube and the pressure chamber. The tube of the peristaltic pump may be a resiliently deformable material, such as silicone. The tube of the peristaltic pump may be disposed against the pressure chamber wall, such that the lobe of the wheel compresses the tube against the pressure chamber wall. The lobe of the wheel compresses the tube to form a seal. The peristaltic pump drives air between inside the pressure chamber and outside the pressure chamber by rotating a lobe of the wheel against the tube. Rotating the wheel transfers air between two openings in the tube.

The pneumatic pump may be powered by an electric motor. Providing an electric motor in the pump has been found to be especially advantageous as it may allow commonality with some features in existing electrical TRVs (e.g. use of common motors/power and /or control of the motor). The electric motor may be housed within the housing of the TRV. More preferably, the electric motor may be housed within the pressure chamber; such an arrangement may reduce the degree of sealing required for the pressure chamber. The power source for the electric motor may be outside of the pressure chamber. The power source for the electric motor may be within the housing of the TRV. Such an arrangement may be beneficial because it allows the power source to be readily replaced (for example to replace batteries). The power for the electric motor may transfer from the power source to the electric motor through a pressure-sealed arrangement in the pressure chamber wall.

The thermostatic radiator valve may be configured to receive a temperature measurement signal. The pneumatic pump may be controlled in dependence on the temperature measurement signal. The TRV may comprise a controller configured to control the pneumatic pump in dependence on the temperature measurement signal.

The thermostatic radiator valve may be fitted to a radiator. The radiator may be part of a heating system, for example a domestic heating system.

According to a further aspect there is provided a thermostatic radiator valve head according to claim 5.

According to a second aspect of the invention there is also provided a method of controlling a thermostatic radiator valve according to the first aspect of the invention. The method comprises the steps of: receiving a temperature measurement; comparing the temperature measurement to a temperature set point;
adjusting the pressure inside a pressure chamber of the thermostatic radiator valve to the required pressure such that an output element moves the valve pin to a valve set point required to achieve the temperature set point.

According to a third aspect of the invention there is also provided a boiler valve in a heating system according to claim 8. The boiler valve comprises a valve body with a valve pin and a valve head comprising an actuation assembly for moving said valve pin, the actuation assembly comprising: a pressure chamber; a pneumatic pump arranged to adjust the pressure inside the pressure chamber; and an output element for abutting the valve pin; wherein the output element is arranged to move in response to a change of pressure inside the pressure chamber such that the change of pressure effects movement of the valve pin. The output element is a diaphragm and the pneumatic pump is a peristaltic pump. Using a peristaltic pump in such a boiler valve has been found to be especially beneficial.

The boiler valve may be a three-way valve.

It will of course be appreciated that features described in relation to one aspect of the present invention may be incorporated into other aspects of the present invention. For example, the method of the invention may incorporate any of the features described with reference to the apparatus of the invention and *vice versa.*

### Description of the Drawings

Embodiments of the present invention will now be described by way of example only with reference to the accompanying schematic drawings of which:
- Figure 1: shows a side view of a TRV according to a first embodiment of the invention;
- Figure 2: shows a sectional view across a section A-A in the valve head in the TRV of Figure 1;
- Figure 3: shows a sectional view across section B-B in the valve head of Figure 1; and
- Figure 4: shows a flow diagram in a second embodiment of the invention.

### Detailed Description

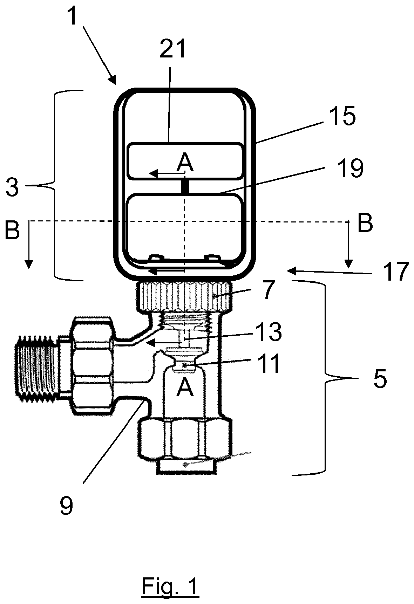

Figure 1 illustrates a thermostatic radiator valve (TRV) 1 according to a first embodiment of the invention. The TRV 1 comprises a valve head 3 connected to a valve body 5 via a securing ring 7. The valve body 5 comprises an angled connector pipe 9 for connecting to pipework on a radiator (not shown). Flow through the connector pipe 9 is selectively controlled via movement of a valve element 11 connected to a valve pin 13. A valve body 5 having these features *per se* is well known and will be understood by the person skilled in the art.

The TRV head 3 comprises a housing 15 which houses an actuation assembly 17 for effecting movement of the valve pin 13. The actuation assembly 15 comprises a pressure chamber 19 and is powered by a power source 21 in the form of a battery, located in the housing 15 above the pressure chamber 19.

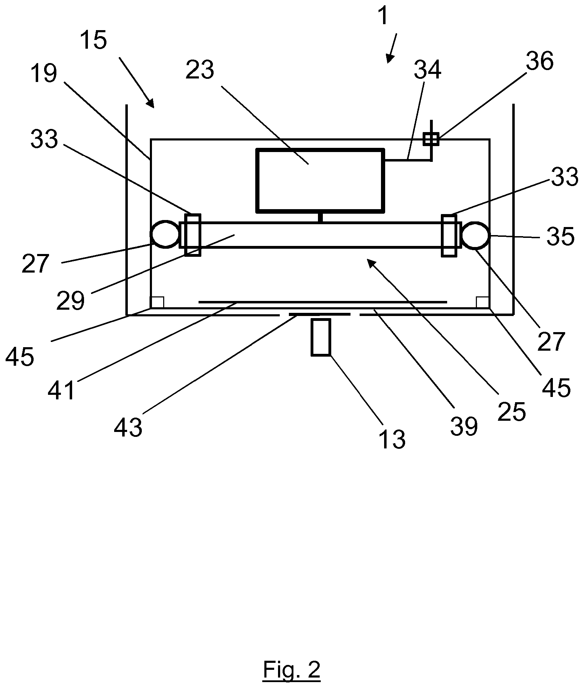

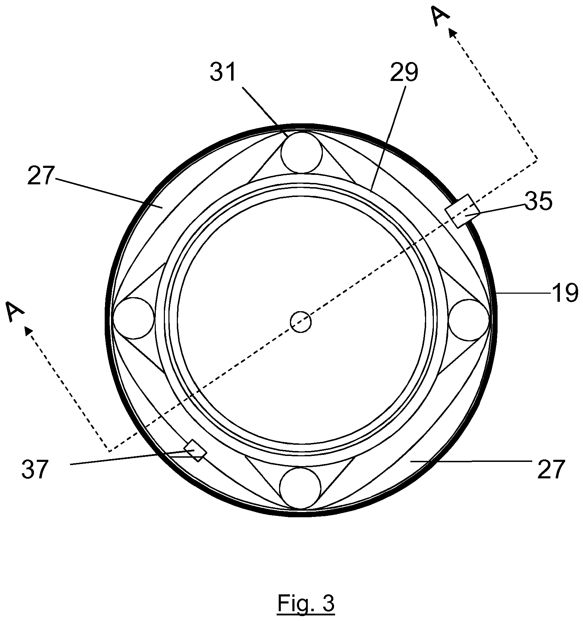

Further details of the actuation assembly 17 in the valve head 3 are shown in Figures 2 and 3 to which reference is now made. Figure 2 shows a sectional view of the TRV 1 in Figure 1; the section is taken along section A-A of Figures 1 and 3. Figure 3 shows a sectional view of the TRV 1 in Figure 1; the section is taken along section B-B of Figure 1.

Referring first to Figure 2, the pressure chamber 19 is located within the housing 15. The pressure chamber 19 has within it a motor 23 configured to drive a peristaltic pump 25. The peristaltic pump 25 comprises a tube 27 and a wheel 29 comprising a multiplicity of lobes 31 (shown in Figure 3) around its perimeter, and bearings 33. The tube 27 is disposed between the lobes 31 of the wheel 29 and the interior wall of the pressure chamber 19. The tube 27 has an inlet 35 and an outlet 37 (shown in Figure 3). The tube enables air transfer between the pressure chamber 19 and the outside environment such that the pressure in the chamber 19 can be decreased, increased, or maintained, via a suitable rotation of the wheel 29. The motor 23 is configured to drive the rotation of the wheel 29 of the peristaltic pump 25. The motor 23 driving the wheel 29 of the peristaltic pump 25 in a forward direction increases the pressure within the pressure chamber 19, while driving the wheel 29 in the rearward direction decreases the pressure within the pressure chamber 19. When the wheel 29 is held in position by the motor 23 there is no substantial increase or decrease in pressure within the pressure chamber 19.

The lobes 31 of the wheel 29 seal the pressure chamber 19 when the wheel 29 is held in a fixed position, by preventing air from passing through the tube 27 past the position of the lobe 31.

The motor 23 according to the first embodiment of the invention is an electric motor. The motor 23 receives power from the battery 21 (not shown in Figure 2 but schematically illustrated in Figure 1) via a power cable 34 which passes through the wall of the pressure chamber 19. The interface between the power cable 34 and the wall is sealed 36 to prevent air egress from the pressure chamber 19.

On the bottom of the pressure chamber is a 5cm diameter diaphragm 39. The diaphragm has an interior face 41 and an exterior face 43. The exterior face 43 is configured to contact the valve pin 13 of the valve body 5. The interface between the diaphragm 39 and the pressure chamber 19 is sealed by seals 45 which prevent pressure egress from the pressure chamber 19.

The exterior surface 43 of the diaphragm 39 is configured to abut a first end of the valve pin 13. The valve pin 13 is connected at its other end to the valve element 11 (see Figure 1) such that downward movement of the valve pin 13 closes the valve. Increasing the pressure within the pressure chamber 19 increases the force applied to the valve pin 13. Decreasing the pressure within the pressure chamber 19 decreases the force applied to the valve pin 13.

The diaphragm has a range of movement. The range of movement of the diaphragm 39 is the maximum difference in displacement of the diaphragm when the pressure chamber 19 is at its extremes of low- and high-pressure achievable in operation. The diaphragm 39 is arranged to have a possible range of movement of between 1mm and 10mm to make it useable on a range of valves. In the first embodiment of the invention, the diaphragm typically undergoes a range of movement of between 1 and 3mm because that is the range of movement of the valve pin in this embodiment.

An arrangement in which the actuation assembly comprises a peristaltic pump has been found to be especially beneficial. For example, it has been found that the above-mentioned arrangement is able to exert a 90N force on the valve pin 13 with around 0.5bar within the pressure chamber 19. Thus, there is no need for a gearbox, that might otherwise be needed for the motor to directly drive the valve pin. This may enable the noise, bulk and/or complexity of the TRV to be reduced, and facilitates a relatively quiet and compact TRV.

The TRV 1 is configured to connect wirelessly to the smart network and the TRV 1 comprises a receiver configured to receive signals from a thermostat, that control the operation of the TRV 1 within the heating system.

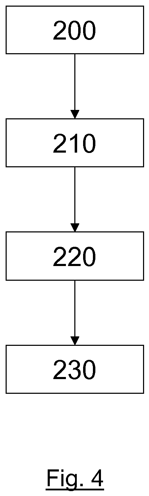

A controller (not shown) controls the operation of the peristaltic pump 25 to alter the position of the valve pin 13. Figure 4 shows a flow diagram of a control scenario in a second embodiment of the invention. The controller receives 200 a temperature measurement input from a thermometer and compares 210 this to a desired temperature set point (communicated by a central thermostat in a heating system). The controller generates 220 a value for a valve set point which will achieve the desired temperature set point and calculates the motor position required to obtain the pressure within the pressure chamber which will achieve the valve set point. The controller then instructs 230 the required motor position to the TRV 1.

Whilst the present invention has been described and illustrated with reference to particular embodiments, it will be appreciated by those of ordinary skill in the art that the invention lends itself to many different variations not specifically illustrated herein, the scope of the invention being defined in the appended claims.

In a further embodiment of the present invention, the peristaltic pump may be located outside the pressure chamber and comprises an outlet that feeds into the pressure chamber. In yet another embodiment of the invention, the actuation assembly may be located in a boiler valve of a heating system as defined in claim 8.

Reference should be made to the claims for determining the true scope of the present invention.

It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A thermostatic radiator valve (1), comprising a valve head (3) and a valve body (5), the valve head (3) comprising an actuation assembly (17) for moving a valve pin (13) of the valve body (5), wherein the actuation assembly (17) comprises:
a pressure chamber (19);
a pneumatic pump (25) arranged to adjust the pressure inside the pressure chamber (19); and
an output element for abutting the valve pin (13);
wherein the output element is arranged to move in response to a change of pressure inside the pressure chamber (19) such that the change of pressure effects movement of the valve pin (13); and
wherein the output element comprises a diaphragm (39) and the pneumatic pump (25) is a peristaltic pump.

2. The thermostatic radiator valve (1) according any preceding claim wherein the pneumatic pump (25) is located inside the pressure chamber (19).

3. The thermostatic radiator valve (1) according to any preceding claim, wherein the actuation assembly (17) comprises an electric motor (23) arranged to drive the pneumatic pump (25).

4. The thermostatic radiator valve (1) according to any preceding claim, wherein the thermostatic radiator valve (1) is configured to receive a temperature measurement signal and the pneumatic pump (25) is controlled in dependence on the temperature measurement signal.

5. A thermostatic radiator valve head (3) for connecting to a valve body (5), wherein the valve head (3) comprises the actuation assembly (17) for moving a valve pin (13) of the valve body (5) according to any of claims 1 to 4.

6. A radiator comprising the thermostatic radiator valve of any of claims 1 to 4.

7. A method of controlling a thermostatic radiator valve (1) according to any of claims 1 to 4,
wherein the method comprises the steps of:
receiving (200) a temperature measurement;
comparing (210) the temperature measurement to a temperature set point;
adjusting the pressure inside the pressure chamber (19) of the thermostatic radiator valve (1) to the required pressure such that the output element moves the valve pin (13) to a valve set point required to achieve the temperature set point.

8. A boiler valve in a heating system, wherein the valve comprises a valve body (5) with a valve pin (13) and a valve head (3) comprising an actuation assembly (17) for moving said valve pin (13), the actuation assembly (17) comprising:
a pressure chamber (19);
a pneumatic pump (25) arranged to adjust the pressure inside the pressure chamber (19); and
an output element for abutting the valve pin (13);
wherein the output element is arranged to move in response to a change of pressure inside the pressure chamber (19) such that the change of pressure effects movement of the valve pin (13); and
wherein the output element comprises a diaphragm (39) and the pneumatic pump (25) is a peristaltic pump.

9. A boiler valve of claim 8, wherein the boiler valve is a three-way valve.

## Patentansprüche

1. Ein Heizkörper-Thermostatventil (1), das einen Ventilkopf (3) und einen Ventilkörper (5) beinhaltet, wobei der Ventilkopf (3) eine Antriebsanordnung (17) zum Bewegen einer Ventilnadel (13) des Ventilkörpers (5) beinhaltet, wobei die Antriebsanordnung (17) Folgendes beinhaltet:
eine Druckkammer (19);
eine Pneumatikpumpe (25), die dazu eingerichtet ist, den Druck in der Druckkammer (19) einzustellen; und
ein Ausgangselement zum Anstoßen an der Ventilnadel (13);
wobei das Ausgangselement dazu eingerichtet ist, sich als Reaktion auf eine Druckänderung in der Druckkammer (19) zu bewegen, sodass die Druckänderung eine Bewegung der Ventilnadel (13) bewirkt; und
wobei das Ausgangselement eine Membran (39) beinhaltet und es sich bei der Pneumatikpumpe (25) um eine Peristaltikpumpe handelt.

2. Heizkörper-Thermostatventil (1) gemäß einem der vorhergehenden Ansprüche, wobei sich die Pneumatikpumpe (25) in der Druckkammer (19) befindet.

3. Heizkörper-Thermostatventil (1) gemäß einem der vorhergehenden Ansprüche, wobei die Antriebsanordnung (17) einen Elektromotor (23) beinhaltet, der dazu eingerichtet ist, die Pneumatikpumpe (25) anzutreiben.

4. Heizkörper-Thermostatventil (1) gemäß einem der vorhergehenden Ansprüche, wobei das Heizkörper-Thermostatventil (1) dazu konfiguriert ist, ein Temperaturmesswertsignal zu empfangen, und die Pneumatikpumpe (25) in Abhängigkeit von dem Temperaturmesswertsignal gesteuert wird.

5. Ein Heizkörper-Thermostatventilkopf (3) zum Verbinden mit einem Ventilkörper (5), wobei der Ventilkopf (3) die Antriebsanordnung (17) zum Bewegen einer Ventilnadel (13) des Ventilkörpers (5) gemäß einem der Ansprüche 1 bis 4 beinhaltet.

6. Ein Heizkörper, der das Heizkörper-Thermostatventil gemäß einem der Ansprüche 1 bis 4 beinhaltet.

7. Ein Verfahren zum Steuern eines Heizkörper-Thermostatventils (1) gemäß einem der Ansprüche 1 bis 4,
wobei das Verfahren die folgenden Schritte beinhaltet:
Empfangen (200) eines Temperaturmesswerts;
Vergleichen (210) des Temperaturmesswerts mit einem Temperatursollwert;
Einstellen des Drucks in der Druckkammer (19) des Heizkörper-Thermostatventils (1) auf den erforderlichen Druck, sodass das Ausgangselement die Ventilnadel (13) auf einen zum Erreichen des Temperatursollwerts erforderlichen Ventilsollwert einstellt.

8. Ein Heizkesselventil in einer Heizungsanlage, wobei das Ventil einen Ventilkörper (5) mit einer Ventilnadel (13) und einem eine Antriebsanordnung (17) zum Bewegen der Ventilnadel (13) beinhaltenden Ventilkopf (3) beinhaltet, wobei die Antriebsanordnung (17) Folgendes beinhaltet:
eine Druckkammer (19);
eine Pneumatikpumpe (25), die dazu eingerichtet ist, den Druck in der Druckkammer (19) einzustellen; und
ein Ausgangselement zum Anstoßen an der Ventilnadel (13);
wobei das Ausgangselement dazu eingerichtet ist, sich als Reaktion auf eine Druckänderung in der Druckkammer (19) zu bewegen, sodass die Druckänderung eine Bewegung der Ventilnadel (13) bewirkt; und
wobei das Ausgangselement eine Membran (39) beinhaltet und es sich bei der Pneumatikpumpe (25) um eine Peristaltikpumpe handelt.

9. Heizkesselventil gemäß Anspruch 8, wobei es sich bei dem Heizkesselventil um ein Dreiwegeventil handelt.

## Revendications

1. Une vanne de radiateur thermostatique (1), comprenant une tête de vanne (3) et un corps de vanne (5), la tête de vanne (3) comprenant un ensemble d'actionnement (17) destiné à déplacer une tige de vanne (13) du corps de vanne (5), dans laquelle l'ensemble d'actionnement (17) comprend :
une chambre de pression (19) ;
une pompe pneumatique (25) agencée pour ajuster la pression à l'intérieur de la chambre de pression (19) ; et
un élément de sortie destiné à venir en butée contre la tige de vanne (13) ;
dans laquelle l'élément de sortie est agencé pour se déplacer en réponse à un changement de pression à l'intérieur de la chambre de pression (19) de telle sorte que le changement de pression provoque un déplacement de la tige de vanne (13) ; et
dans laquelle l'élément de sortie comprend un diaphragme (39) et la pompe pneumatique (25) est une pompe péristaltique.

2. La vanne de radiateur thermostatique (1) selon n'importe quelle revendication précédente dans laquelle la pompe pneumatique (25) est située à l'intérieur de la chambre de pression (19).

3. La vanne de radiateur thermostatique (1) selon n'importe quelle revendication précédente, dans laquelle l'ensemble d'actionnement (17) comprend un moteur électrique (23) agencé pour entraîner la pompe pneumatique (25).

4. La vanne de radiateur thermostatique (1) selon n'importe quelle revendication précédente, la vanne de radiateur thermostatique (1) étant configurée pour recevoir un signal de mesure de température et la pompe pneumatique (25) étant commandée en fonction du signal de mesure de température.

5. Une tête de vanne de radiateur thermostatique (3) destinée à être raccordée à un corps de vanne (5), la tête de vanne (3) comprenant l'ensemble d'actionnement (17) destiné à déplacer une tige de vanne (13) du corps de vanne (5) selon n'importe lesquelles des revendications 1 à 4.

6. Un radiateur comprenant la vanne de radiateur thermostatique de n'importe lesquelles des revendications 1 à 4.

7. Un procédé de commande d'une vanne de radiateur thermostatique (1) selon n'importe lesquelles des revendications 1 à 4,
le procédé comprenant les étapes :
de réception (200) d'une mesure de température ;
de comparaison (210) de la mesure de température à un point de consigne de température ;
d'ajustement de la pression à l'intérieur de la chambre de pression (19) de la vanne de radiateur thermostatique (1) à la pression requise de telle sorte que l'élément de sortie déplace la tige de vanne (13) vers un point de consigne de vanne requis pour atteindre le point de consigne de température.

8. Une vanne de chaudière dans un système de chauffage, la vanne comprenant un corps de vanne (5) avec une tige de vanne (13) et une tête de vanne (3) comprenant un ensemble d'actionnement (17) destiné à déplacer ladite tige de vanne (13), l'ensemble d'actionnement (17) comprenant :
une chambre de pression (19) ;
une pompe pneumatique (25) agencée pour ajuster la pression à l'intérieur de la chambre de pression (19) ; et
un élément de sortie destiné à venir en butée contre la tige de vanne (13) ;
dans laquelle l'élément de sortie est agencé pour se déplacer en réponse à un changement de pression à l'intérieur de la chambre de pression (19) de telle sorte que le changement de pression provoque un déplacement de la tige de vanne (13) ; et
dans laquelle l'élément de sortie comprend un diaphragme (39) et la pompe pneumatique (25) est une pompe péristaltique.

9. Une vanne de chaudière de la revendication 8, la vanne de chaudière étant une vanne à trois voies.
